(19) Europäisches Patentamt / European Patent Office / Office européen des brevets

(11) **EP 4 083 275 A1**

(12) **EUROPEAN PATENT APPLICATION**

(43) Date of publication:
**02.11.2022 Bulletin 2022/44**

(21) Application number: **21382385.9**

(22) Date of filing: **30.04.2021**

(51) International Patent Classification (IPC):
$C25F\ 3/04$ (2006.01)  $B01D\ 53/14$ (2006.01)
$C02F\ 1/467$ (2006.01)  $C25D\ 11/26$ (2006.01)
$C25B\ 11/063$ (2021.01)  $C25B\ 11/079$ (2021.01)
$C02F\ 1/461$ (2006.01)  $C02F\ 101/10$ (2006.01)

(52) Cooperative Patent Classification (CPC):
**C02F 1/46109; B01D 53/1468; C02F 1/4672;
C25F 3/04;** C02F 2001/46142; C02F 2101/101;
C02F 2305/08

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicants:
• **Fundació Institut Catala de Recerca de l'Aigua
(ICRA)
17003 Girona (ES)**

• **Institució Catalana De Recerca I
Estudis Avançats (ICREA)
08010 Barcelona (ES)**

(72) Inventors:
• **RADJENOVIC, Jelena
17003 Girona (ES)**
• **SERGIENKO, Natalia
17003 Girona (ES)**

(74) Representative: **Juncosa Miró, Jaime
Torner, Juncosa i Associats, S.L.
C/Pau Claris, 108, 1r 1a
08009 Barcelona (ES)**

(54) **METHOD TO PREPARE AN ELECTRODE WITH A MANGANESE OXIDE COATED TITANIUM OXIDE NANOTUBE ARRAY INTERLAYER, ELECTRODE OBTAINED THEREOF, AND USES OF THE ELECTRODE**

(57)     The present invention is directed to a method to prepare an electrode with a manganese oxide coated titanium oxide nanotube array interlayer comprising the following steps: a) polishing a titanium plate; b) degreasing, rinsing and drying the polished titanium plate; c) etching the titanium plate with an inorganic acid having a concentration of 5% w/w or more; d) anodizing the treated titanium plate of step c) in a solvent comprising a fluoride salt by applying a voltage of 10 to 30 V to obtain the titanium oxide nanotube array interlayer on the titanium plate; e) rinsing the titanium plate in water; f) calcinating the anodized titanium plate; g) depositing manganese onto the calcinated titanium plate by anodic electrodeposition in a medium containing a manganese (II) salt and an inorganic acid, providing a manganese oxide coated titanium oxide nanotube array interlayer on the titanium plate.

The electrode is used for desulfurization of wastewater or biogas.

FIG. 1

EP 4 083 275 A1

## Description

### TECHNICAL FIELD

The present disclosure relates to a method to prepare an electrode with a manganese oxide coated titanium oxide nanotube array interlayer. It further relates to the electrode obtained thereof and to the use of the electrode for the purification of water and other fluids.

### BACKGROUND ART

Wastewater, introduced into the municipal collection systems, is characterized by the abundance of sulfate, whose primary source is household cleaning detergents and alum-based flocculants used for potable water purification. Waste streams, rich in sulfate and organic matter, flowing through pipelines at low velocity, create particularly favorable conditions for the sulfate reducing bacteria (SRB). As a result of the SRB activity, sulfate is rapidly reduced to sulfide, followed by the hydrogen sulfide release into the gaseous phase of the sewer pipe. Even at concentration as low as 1-2 mgL$^{-1}$, hydrogen sulfide causes "rotten egg" odor typically associated with the sewer systems. Hydrogen sulfide gas is heavier than air and tends to accumulate in sewers, reaching life threatening concentrations for people involved in its maintenance. Under certain biogenic pathway, hydrogen sulfide gas is oxidized into sulfuric acid, which attacks concrete and metal pipes, leading to premature deterioration of the sewer assets.

In addition to sewer systems, sulfide represents a serious problem in anaerobic digestion. Sulfide in anerobic digestors is also produced by SRB, that utilizes sulfate introduced to a digestor alongside with the feed. Depending on fermentation conditions, hydrogen sulfide tends to volatilize from the liquid phase and mix with the produced methane. Depending on sulfate load and pH of the reactor, hydrogen sulfide concentration in raw biogas may vary from 50 to 5000 ppm. Hydrogen sulfide content above 500 ppm causes severe corrosion of piping and pumps associated with biogas transportation and storage. Furthermore, upon combustion, hydrogen sulfide causes corrosion problems in combustion engines, quick degradation of engine lube oil and sulfur dioxide emissions. To comply with equipment tolerance, the maximum allowed hydrogen sulfide concentration in the biogas utilized in internal combustion engine is between 200 and 500 ppm. In case of direct injection of upgraded biomethane into the natural gas pipeline, hydrogen sulfide content must be reduced below 4 ppm.

Sulfide removal in both sewer systems and anaerobic digestors is normally achieved by means of physicochemical methods. However, these methods often require continuous dosage of chemicals (e.g., nitrate, oxygen, caustic, lime, magnesium hydroxide, iron salts) as well as significant energy inputs, leading to high operational costs and environmental drawbacks. Moreover, if biogas desulfurization is an established step of biogas upgrading technology, sulfide control in sewers is not so common, especially at small-scale. Since sewers are placed underground, it is difficult to determine the level of corrosion, and as a result, this problem is often overlooked. Besides, technologies currently available at the market are economically unattractive and cause various operating problems.

Given the limited technical solutions and the large scale of the problem of sewer corrosion, in recent years researchers have turned their focus towards the electrochemical sulfide control. The electrochemical sulfide control can be performed in-situ, thus eliminating all the risks and costs associated with the chemicals dosing, storage and transportation. Moreover, electrochemical approach is selective and can avoid undesirable side-reactions.

Sulfide oxidation with manganese is a well-known process naturally occurring in sediments, yet it has been barely exploited for sulfide removal from wastewater or biogas. For instance, Wlodarchak et al. Proceedings of the Water Environment Federation, 2002 discloses the treatment of wastewater using potassium permanganate.

Even the dosing of permanganate involves fast sulfide removal at first, the treatment performance gradually decreases as Mn becomes depleted due to its interaction with sulfide.

However, Sergienko et al. Applied Catalysis B: Environmental 267 (2020) discloses manganese oxide-coated graphite felt electrodes having (electro)catalytic activity and selectivity for sulfide oxidation to sulfur.

Several reports also disclose nanotube arrays coated with manganese oxide.

Li et al. disclose the synthesis of a nanostructure of hybrid arrays of $MnO_2$ and $TiO_2$, using a chemical bath deposition method.

Massa et al. Applied Catalysis B: Environmental 203 (2017) discloses the electrodeposition of manganese oxide over metallic titanium and titania nanotubes and the electrochemical properties of the electrodes obtained therein. Said article discloses the ability of the electrodes to degrade phenol in water.

CN105185598A discloses a $Mn_3O_4/TiO_2$ nanotube composite material synthesized with a chemical bath deposition method. The composite material described therein is directed to a supercapacitor.

CN109179590A relates to a titanium-based carbon doped manganese oxide electrode for printing and dyeing wastewater treatment. The material of this application is a composite nanomanganese oxide layer doped with multi-walled carbon nanotubes on a titanium substrate.

However, it still remains in the art a need to obtain improved systems for biogas and water desulfurization having low operational costs and being environmentally friendly.

## SUMMARY OF THE INVENTION

In order to address one or more of the foregoing problems, one aspect of the present invention provides a method to prepare an electrode with a manganese oxide coated titanium oxide nanotube array interlayer comprising the following steps: a) polishing a titanium plate; b) degreasing, rinsing and drying the polished titanium plate; c) etching the titanium plate in a solution comprising an inorganic acid having a concentration of 5% or more by weight w/w or more with respect to the total amount of solution; d) anodizing the treated titanium plate of step c) in a solvent comprising a fluoride salt by applying a voltage of 10 to 340 V to obtain the titanium oxide nanotube array interlayer on the titanium plate; e) rinsing the titanium plate in water; f) calcinating the anodized titanium plate; g) depositing manganese onto the calcinated titanium plate by anodic electrodeposition in a medium containing a manganese (II) salt and an inorganic acid, providing a manganese oxide coated titanium oxide nanotube array interlayer on the titanium plate.

Another aspect of the invention relates to an electrode having a manganese oxide coated titanium oxide array interlayer obtained by the method described hereinabove.

The present invention also relates to the use of the electrode as described herein in wastewater purification or biogas purification, and to the use of the electrode as described herein in desulfurization of a fluid, preferably wastewater or biogas.

## BRIEF DESCRIPTION OF THE DRAWINGS

FIG. 1 shows field emission scanning electron microscopy (FESEM) images of a) the cross section of self-organized $TiO_2$ nanotube array (NTA) filled with $Mn_xO_y$; top view of $TiO_2$ NTA coated with the $Mn_xO_y$ using precursor solution containing 0.1 M $MnSO_4$ and b) 0.05 M $H_2SO_4$, c) 0.5 M $H_2SO_4$, d) 0.5 M $H_2SO_4$ followed by the calcination at 500°C, e) 0.5 M $H_2SO_4$ and 0.01M aniline.

FIG. 2 depicts the decrease in $HS^-$ concentration (C) normalized to the initial value ($C_0$) during sulfide removal experiment at 0.8 V/SHE (standard hydrogen electrode) applied to the $Ti/TiO_2NTA-Mn_xO_y$ electrodes.

FIG. 3 depicts the decrease in $HS^-$ concentration (C) normalized to the initial value ($C_0$) during sulfide removal experiment at 0.8 V/SHE (standard hydrogen electrode) applied to the $Ti/TiO_2NTA-Mn_xO_y/PANI$ electrodes.

FIG. 4 depicts the decrease in $HS^-$ concentration (C) normalized to the initial value ($C_0$): a) during open circuit (OC) or electrochemical sulfide removal experiments performed at various potentials, b) during electrochemical experiments performed at 0.8 V/SHE, using various initial sulfide concentrations, c) during electrochemical experiments performed at 0.8 V in 3 mM $NaNO_3$ supporting electrolyte amended with 2 mM of $HS^-$ at pH 8 and pH 12.

FIG. 5 shows FESEM images and EDX spectra of the: a) $Ti/TiO_2$ NTA-$MnO_2$ electrode after the electrochemical sulfide removal test performed at pH 12, b) $Ti/TiO_2$ NTA-$MnO_2$ electrode after the electrochemical sulfide removal test performed at pH 8.

FIG. 6 depicts observed first-order sulfide removal rates ($h^{-1}$) at the $Ti/TiO_2$ NTA-$Mn_xO_y$ electrodes applied over three subsequent cycles in synthetic electrolyte containing 3 mM $NaNO_3$ and 2 mM of $HS^-$, at pH 12 and pH 8, and in the real sewage at pH 8.

## DETAILED DESCRIPTION OF THE INVENTION

Unless otherwise indicated, all the potentials (voltages) in this application are expressed vs. Standard Hydrogen Electrode (SHE) and calculated according to Nernst's equation.

As described hereinabove, the present invention relates to a method to prepare an electrode with a manganese oxide coated titanium oxide nanotube array interlayer comprised of the following steps: a) polishing a titanium plate; b) degreasing, rinsing and drying the polished titanium plate; c) etching the titanium plate with in a solution comprising an inorganic acid having a concentration of 5% or more by weight with respect to the total amount of solution; d) anodizing the treated titanium plate of step c) in a solvent comprising a fluoride salt by applying a voltage of 10 to 40 V to obtain the titanium oxide nanotube array interlayer on the titanium plate; e) rinsing the titanium plate in water; f) calcinating the anodized titanium plate; g) depositing manganese onto the calcinated titanium plate by anodic electrodeposition in a medium containing a manganese (II) salt and an inorganic acid, providing a manganese oxide coated titanium oxide nanotube array interlayer on the titanium plate.

In the present application, the expression "manganese oxide" should be understood as $Mn_xO_y$, that is, a mixture of manganese oxides wherein the manganese has several oxidation states.

The titanium plates according to the present invention are mechanically polished, preferably until mirror finish. Polishing of said plates is optimized when performed by sandblasting. Therefore, the present invention preferably involves polishing by sandblasting.

The degreasing in step b) according to the present invention may be performed in a solvent selected from the group comprising isopropanol, acetone, methanol or combinations thereof. Said degreasing step may further comprise sonicating the polished titanium plate in the solvents mentioned above.

The rinsing agent in step b) may preferably be water.

The polished titanium plate, after degreasing and rinsing, may be dried in a nitrogen or argon stream, optionally left to dry in air.

After step b), the titanium plates are submitted to an etching process to obtain a fresh metal surface. Etching is performed so as to increase the surface area of the titanium plate by promoting surface roughness. Said etching process may be carried out in concentrated hydrochloric acid, preferably having a concentration of between 10 to 18% w/w. Other suitable acids involve hydrofluoric acid, hydrobromic acid, sulfuric acid, nitric acid and combinations thereof.

Preferably, the etching process is performed at a temperature of between 20 and 100°C, preferably between 50 and 90°C, more preferably between 60 and 90°C, even more preferably between 60 and 80 °C.

Preferably, the etching process is performed for 5 to 60 minutes, preferably between 5 and 40 minutes, more preferably between 10 and 30 minutes, more preferably between 15 and 30 minutes, even more preferably between 10 and 20 minutes.

When etching is performed at a temperature between 60 and 90 °C, a minimum of 15 minutes is required to obtain a surface that is classified as moderately rough.

Moreover, prolonged times of etching, i.e. above 60 minutes, may produce very large irregularities in the surfaces, thus deteriorating the electrochemical properties of the material.

The titanium plate is anodized preferably using a two electrode cell configuration, preferably using stainless steel mesh as the counter electrode. The anodization is carried out in a solvent containing a fluoride salt.

Preferably, the solvent in the anodization step d) is a combination of a protic solvent and another solvent selected from the group of diols, polyols or polar aprotic solvents.

The amount of protic solvent with respect to the total amount of solvent is in the range of 20-80%, preferably in the range between 30-70%, more preferably in the range between 40-60%, yet even more preferably at 50% with respect to the total volume of solvent.

The amount of fluoride salt in the solvent is preferably from 0.05 to 10%, more preferably from 0.05 to 5%, more preferably from 0.1 to 2%, even more preferably from 0.1 to 1%, yet even more preferably at 0.5% by weight with respect to the total volume of the solvent.

The protic solvent according to the present invention is preferably selected from the group comprising water, ethanol or methanol, while the other solvent is preferably selected from the group comprising ethylene glycol, glycerol, diethylene glycol, triethylene glycol, polyethyleneglycol, dimethylsulfoxide, formamide, N-methylformamide and dimethylformamide.

More preferably, the solvent in step d) is a combination of water and another solvent selected from the group comprising ethylene glycol, glycerol, diethylene glycol, triethylene glycol, polyethyleneglycol. Alternatively, the solvent in step d) is a combination of ethanol and another solvent selected from the group comprising dimethylsulfoxide, formamide, N-methylformamide and dimethylformamide.

The fluoride salt according to the present invention is preferably selected from the group comprising sodium fluoride, potassium fluoride and ammonium fluoride. Preferably, the fluoride slat according to the present invention is ammonium fluoride.

The solvent in step d) in the present invention may preferably comprise a mixture of water and glycerol, and the fluoride salt may be ammonium fluoride.

The anodization step d) is preferably carried out at a voltage of between 10 and 30 V, more preferably between 15 and 25 V, even more preferably at 20 V. The anodization step d) preferably takes a time between 30 minutes and 5 hours, preferably between 1 and 5 hours, more preferably between 1 and 4 hours, more preferably between 1 and 3 hours, even more preferably for 2 hours. It is known in the art that titanium nanotubes can be formed when the voltage is in the range between 10 to 240 V, however, only samples synthesized in the range 10 to 30V were reported to be highly conductive.

As described herein, step d) leads to the obtention of a titanium oxide nanotube array interlayer on the titanium plate. Said material is highly conductive and is characterized by having a high specific surface area, enabling the deposition of a larger amount of a catalyst and increasing the electrocatalytic activity of the electrode. Moreover, it can improve adhesion and enhance the electron transfer between the coating and the substrate, thus ensuring a rapid recovery of the coating (manganese oxide in the present application)

According to the present invention, the calcination step f) is performed at a temperature between 300 and 500°C, preferably between 350 and 450°C, more preferably at 400°C.

Preferably, the calcination step f) is performed for at least 30 minutes, preferably for at least 1 hour, preferably for a time between 1 and 4 hours, more preferably for 2 hours. The calcination of the treated titanium plate is preferably done under an inert atmosphere, under nitrogen gas or argon, preferably in a tubular oven. The calcination step ensures that amorphous $TiO_2$ is transformed completely into $TiO_2$ in anatase phase.

According to the present invention, the manganese (II) salt in the step of deposition of manganese oxide in step g) is preferably manganese (II) sulfate. Other alternatives envisaged are manganese (II) acetate, manganese (II) nitrate and manganese (II) chloride. The use of manganese (II) sulfate is especially preferred because of the low cost of said manganese salt and the inertness of the counterion sulfate.

According to the present invention, the manganese (II) salt in step g) is comprised in a concentration of between 0,01 M and 2 M, preferably between 0,05 M and 1 M, more preferably between 0,05 M and 0,5 M, more preferably between 0,05 M and 0,2 M, even more preferably 0,1 M.

Moreover, according to the present invention, the inorganic acid in step g) is sulfuric acid, but other mineral acids such as nitric acid or hydrochloric acid might be used.

According to the present invention, the inorganic acid in step g) is comprised in a concentration between 0,001 M and 1 M, preferably between 0,01 M and 1 M, more preferably between 0,05 M and 0,5 M.

The method according to the present invention may also comprise the anodic electrodeposition in step g) performed in the potentiostatic mode at 0,5 to 5 V vs SHE, preferably between 0,5 to 3 V, preferably between 1 and 2 V, more preferably at 1,7 V.

The method according to the present invention may also comprise a medium in step g) comprising an organic compound able to produce a conductive polymer. Said organic compounds are preferably selected from the group of aromatic cycles, preferably selected from the group of fluorene, benzene, pyrene, azulene, naphthalene, pyrrole, carbazole, indole, azepines, thiophene, 3,4-ethylenedioxythiophene, p-phenylene sulfide or combinations thereof. Said organic compounds yield their corresponding conductive polymer poly(fluorene), polyphenylene, polypyrene, polyazulene, polynaphtalene, polypyrrole, polycarbazole, polyindole, polyazepin, polyaniline, polythiophene, poly(3,4-ethylenedioxythiophene), poly(p-phenylene sulfide) or combinations thereof. Said organic compounds are preferably selected from the group of aniline, pyrrole, thiophene or combinations thereof that will yield the corresponding polymers polyaniline, polypyrrole, polythiophene or combinations thereof. Incorporation of said polymers into $Mn_xO_y$ films can significantly enhance electrochemical and mechanical properties of the resulting material.

The ratio between the manganese (II) salt in step g) and the compound able to produce a conductive polymer, as defined above, is in a range between 0.1:1 to 50:1, preferably from 1:1 to 20:1, more preferably from 5:1 to 15:1, even more preferably 10:1.

Moreover, the method according to the present invention may also comprise a second calcination step after $Mn_xO_y$ electrodeposition. Calcination at a temperature above 500°C may increase crystallinity of the $Mn_xO_y$ coating, thereby enhancing its catalytic activity.

The present invention also relates to an electrode having a manganese oxide coated titanium oxide nanotube array interlayer obtained by the method described herein.

The present invention further relates to the use of said electrode in wastewater purification or biogas purification. Moreover, said electrode may be used in the desulfurization of a fluid, preferably wastewater or biogas. In the case of biogas desulfurization, the sulfide is first absorbed by a dilute alkaline solution leading to removal of sulfide from the gaseous phase into a liquid phase; the absorbent is then regenerated using the electrode according to the present invention.

As detailed below, the use of an electrode according to the present invention enables to oxidize the noxious sulfide anion, providing a very convenient solution to the rapid removal of sulfide and to the selective oxidation of sulfide to colloidal sulfur. Electrocatalytic sulfide removal using the electrodes according to the present invention overcomes two major limitations of conventional direct electrochemical sulfide oxidation - low efficiency for diluted solutions and electrode passivation with sulfur, while maintaining low energy input requirements. That is, the electrodes according to the present invention are very effective in solutions having a low concentration of sulfide, such as wastewater or biogas, are not passivated with the sulfur obtained by oxidizing sulfide and need a low amount of energy to perform optimally. Note as well that by polarizing the electrode, the catalytic manganese oxide is regenerated in a continuous way.

Moreover, it is important to note that the method according to the present invention involves significant advantages such as the use of low cost of earth-abundant manganese, low energy consumption, low bioavailability of electrochemically produced sulfur, modularity and possibility of automated, remote operation of the electrooxidation of sulfide.

The deposition of sulfur at the electrode surface might be considered beneficial for application in sewer systems and biogas purification systems as it enables complete separation of sulfur from the stream, thus, avoiding the problems with sulfide reformation. Moreover, direct oxidation of sulfide to sulfur requires low energy input, especially compared to the indirect sulfide oxidation with electrochemically produced oxygen, or via direct electron transfer to sulfate. On the other hand, several studies mentioned that the efficiency of direct sulfide oxidation is significantly deteriorated in sewage with low sulfur content due to mass transfer limitation, which is a major issue considering that average sulfide concentration is sewage rarely exceeds 3 mM. Besides, gradual loss of performance associated with the sulfur deposition is another important drawback which prevents the implementation of this approach in practice. Previously proposed strategies aimed at the mitigation of the electrode passivation such as extraction of sulfur with organic solvents, use of surfactants, and cathodic dissolution of the electrodeposited sulfur are either incapable of full restauration of sulfide removal capacity, economically unattractive or environmentally hazardous. Hence, switching to electrochemical production of colloidal sulfur at low applied potentials can help maintain low energy requirements of direct sulfide oxidation to sulfur, while avoiding problems with passivation and decreased efficiency in waste streams with low sulfide content. Even though colloidal sulfur remains in the stream, it is unlikely to lead to sulfide reformation due to its low solubility.

## EXAMPLES

The following examples are provided with the intent of further illustrating the present invention but should in no case be interpreted as to be limiting of the present invention.

Example 1: Material synthesis

Synthesis of the $TiO_2$ nanotube array (NTA)

4 x 4 cm Ti plates (1mm, 99.6% purity, Advent Research Materials, UK) were mechanically polished until mirror finish. Polished materials were then degreased by sonication in isopropanol, acetone, and methanol, rinsed with deionized water and dried in a nitrogen steam. Titanium plates were etched in 17% w/w HCl aqueous solution (Scharlab, Spain) at 75°C for 15 min to obtain fresh metal surface for nanotubes growth. Next, the Ti plates were anodized in a mixture of glycerol and deionized water (50:50 vol. %) with 0.5 wt% $NH_4F$, using a two-electrode cell configuration and stainless steel mesh as the counter electrode. The potential of the cell was controlled with Autolab 302N potentiostat/galvanostat equipped with a voltage amplifier (Metrohm Autolab B.V., The Netherlands). The anodization procedure included ramping of the potential from the open circuit (OC) to 20 V and maintaining the potential at 20 V during 2 h. After the treatment, the NTA samples were soaked in the deionized water and calcinated in argon at 400°C for 2 h using a tubular oven (Nabertherm, Germany).

The anodization method employed resulted in uniform and well-aligned aligned $TiO_2$ NTAs, with outer average diameters of 80-100 nm, wall thickness of 7-10 nm and the average length of about 1 $\mu$m.

Electrodeposition of $Mn_xO_y$

The Ti/$TiO_2$ NTA-$Mn_xO_y$ electrodes were synthesized using anodic electrodeposition in a three-electrode setup at ambient temperature (i.e., 24±1 °C), using stainless steel mesh as counter and Ag/AgCl (KCl 3M, Bioanalytical systems, the Netherlands) as reference electrode. The electrodeposition medium contained 0.1 M $MnSO_4$, and two different acid concentrations, 0.05 and 0.5 M $H_2SO_4$, to investigate the influence of the acid concentration on the $Mn_xO_y$ coating characteristics. The electrodeposition was performed in the potentiostatic mode at 1.7 V/SHE (vs Standard Hydrogen Electrode). All the potentials reported in this application are expressed vs SHE and calculated according to Nernst's equation. To ensure the reproducibility of each deposition, the mass of the manganese oxide loading was calculated according to Faraday's law and the charge was limited to 13 C. To investigate the effect of the temperature treatment on the $Mn_xO_y$ coating, some Ti/$TiO_2$ NTA-$Mn_xO_y$ samples were also calcinated at 500 °C in air for 1 h in a tubular oven (Nabertherm, Germany). Co-deposition of $Mn_xO_y$ and PANI was performed in the medium containing 0.1 M $MnSO_4$, 0.5 M $H_2SO_4$ and 0.01M of aniline. The ratio between Mn and aniline precursors was 10:1. The Ti/$TiO_2$ NTA substrate, submerged in the precursor medium, was polarized at 1.7 V/SHE. The charge was limited to 26 C to compensate increased current due to the presence of aniline and to obtain $Mn_xO_y$/PANI coating with thickness similar to $Mn_xO_y$.

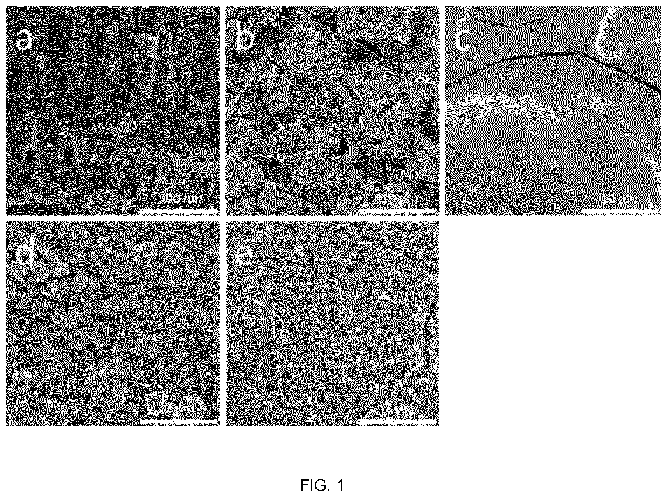

The cross-section of the Ti/$TiO_2$ NTA substrate after the coating with $Mn_xO_y$ (Figure 1a) shows that anodic electrodeposition does not lead to any visible change in NTA morphology. The XRD patterns demonstrate that the NTA interlayer consists of pure tetragonal anatase phase, which is typically observed at the $TiO_2$ NTA after calcination at 400 °C. The diffraction peaks of the NTA-$Mn_xO_y$ have a similar position compared to the non-coated NTAs, which further confirms that the $TiO_2$ NTA structure was not affected by the electrodeposition process.

Though demonstrating strong signal typical for Ti and $TiO_2$, the X-ray diffraction (XRD) spectra of the coated samples both with and without calcination showed no peaks characteristic for the $Mn_xO_y$ crystalline phase. The absence

of the $Mn_xO_y$ signal in the XRD patterns was likely caused by overlapping of the substrate and the $Mn_xO_y$ peaks. The presence of $Mn_xO_y$ was confirmed by the X-ray photoelectron spectroscopy (XPS) analysis, as explained below.

Example 2: Material characterization

The surface morphology of the synthesized materials was examined using an ultra-high resolution field emission scanning electron microscopy (FESEM) (The Magellan 400L, FEI, US). The cross-section images were taken from the cracked layers after bending the samples. The crystal structure of the materials was determined by an X-ray powder diffractometer (X'Pert MPD, PANalytical, Netherlands) with Cu as $K\alpha$ radiation source. The X-ray diffraction (XRD) patterns of the samples were recorded between 10 and 80° (2h) at a scan step size of 0.02°, and a time per step of 353 s. The chemical state analysis of the $Mn_xO_y$ coating was performed using X-ray photoelectron spectroscopy (XPS) using an X-ray photoelectron spectrometer (PHOIBOS 150, Specs, Germany). The Mn 3s doublet peak separation values were then used to determine the valence state of Mn in the sample.

The electroactive surface area of the $Ti/TiO_2$ NTA-$Mn_xO_y$ 1 electrodes was estimated by measuring the double layer capacitance ($C_{dl}$) observed during the cyclic voltammetry (CV) measurement in the 0.1 M $NaNO_3$. Voltametric scans were performed over a potential window between 0.4 - 1 V/SHE and at scan rates between 30 and 2 mV s-1. Values for $C_{dl}$ were determined by the linear regression of the current versus the scan rate, according to the following equation:

$$\frac{I_a - I_c}{2} = C_{dl}v$$

where $I_a$ and $I_c$ are the anodic and the cathodic currents observed in the forward and reversed scans (mA), respectively, and v is the applied scan rate ($mV \cdot s^{-1}$). The electroactive surface area was then determined by dividing the capacitance by 60 $mF \cdot cm^{-2}$, which is considered as a standard value for the metal oxide based systems.

The anodic electrodeposition resulted in the penetration of $Mn_xO_y$ inside the NTAs (Figure 1a), followed by the formation of a uniform $Mn_xO_y$ layer with the approximate thickness of 100 nm on the top of the NTAs. The top view of the $Mn_xO_y$ coatings synthesized at 0.05 M and 0.5 M $H_2SO_4$ concentration reveals visibly distinct $Mn_xO_y$ morphology. Lower acidity of the precursor solution yielded smooth $Mn_xO_y$ coating (Figure 1b), while high acid concentration leads to formation of the coating with rod-like morphology (Figure 1c). Shaker et al previously demonstrated that pH is the crucial parameter that can affect the structure, composition, and the morphology of the electrodeposited $Mn_xO_y$ coating. The difference in the pH of the deposition baths (e.g., pH 1.5 for 0.05 M $H_2SO_4$ and pH 0.5 for 0.5 M $H_2SO_4$) had a significant effect on the $Mn_xO_y$ coating morphology, as strongly acidic solution enhance the dissolution rate of the $Mn_xO_y$ and lead to the formation of a thinner coating with rod-like morphology [52]. The morphological difference of the two coatings may also result from the higher ionic conductivity of the strongly acidic bath (i.e., 179.3 mS·cm-1 for 0.5 M $H_2SO_4$, vs 24.5 mScm-1 for 0.05 M $H_2SO_4$), which leads to higher current during the anodic deposition of the $Mn_xO_y$, and thus significantly reduced deposition 1 time (i.e., 42 s) compared to the less acidic bath (i.e., 74 s). As was demonstrated in a previous study (Sergienko, N et al. Applied Catalysis B: Environmental, 267 (2020)), prolonged electrodeposition leads to the smoother $Mn_xO_y$ coating surface as nanorods, formed upon initial nucleation, continue to grow in all directions and finally merge into adjacent growth centers. The smooth $Mn_xO_y$ coating is typically characterized by the low specific surface area due to the lack of relief in its structure. In addition to the electrodeposition bath acidity, subsequent calcination of the $Ti/TiO_2$ NTA/ $Mn_xO_y$ had a significant impact on the material morphology, transforming the nanorods into needle like structures with more compact grains (Figure 1d). Finally, addition of aniline into the electrodeposition bath yielded porous coating containing both $Mn_xO_y$ and polyaniline (PANI) with characteristic morphology.

The composition of the $Mn_xO_y$ coating was investigated using the XPS analysis. The Mn 3s doublet peak separation was used to determine the Mn valence, since this method was reported to be more reliable compared to the one based on the location of the Mn 2p peaks only. Different Mn 3s doublet peak splitting values were previously reported in the literature, including 4.5, 5.2, 5.4, and 5.8 eV for $MnO_2$ (Mn I), $Mn_2O_3$ (Mn III), $Mn_3O_4$ (Mn II, Mn III), and MnO (Mn II), respectively. The doublet peak separation values for the non-calcinated samples is typical for $MnO_2$ (Mn IV). This valence state is common for the $Mn_xO_y$ coatings synthesized via the anodic electrodeposition pathway in strong acidic media, that occurs through the following reaction:

$$Mn^{2+} + 2H_2O \rightarrow MnO_2 + 4H^+ + 2e^-$$

The doublet peak separation in the samples subjected to the calcination widened, which indicates the conversion of $MnO_2$ (Mn IV) into $Mn_2O_3$ (Mn III). This phase transformation was reported to occur at 500°C because of the desorption of the lattice oxygen and thermal decomposition according to the following pathway:

$$4MnO_2 \rightarrow 2Mn_2O_3 + O_2$$

The Mn 3s doublet peak splitting in Ti/TiO$_2$ NTA - Mn$_x$O$_y$/PANI samples was estimated at 5.0 eV. This value indicates that manganese oxide present in Mn$_x$O$_y$/PANI coating is comprised of both MnO$_2$ and Mn$_2$O$_3$. The presence of Mn$_2$O$_3$ sites is the result of catalytic polymerization of aniline, which typically leads to the reduction of MnO$_2$. The presence of PANI in such samples was also confirmed by characteristic C1s and N1s peaks observed at the photoelectron spectra.

The impact of the NTA interlayer on the Mn$_x$O$_y$ coating morphology or composition could not be investigated because the Mn$_x$O$_y$ coating could not be deposited on a plane Ti plate in any of the investigated deposition conditions. Linear sweep voltammetry performed at the TiO$_2$ NTA indicates the clear peak at 1.7 V/SHE, which was attributed to the Mn$^{2+}$ oxidation to MnO$_2$, while bare Ti plate yields very low current with absence of any distinguishable peaks. The resistance of the Ti plate is significantly higher compared to the anodized substrate with the TiO$_2$ NTAs. Therefore, limited charge transfer at the bare Ti substrate obstructed the nucleation and subsequent formation of the Mn$_x$O$_y$ coating, which was only possible on the highly conductive TiO$_2$ NTA interlayer.

Example 3: Sulfide removal tests

Electrochemical experiments were carried out in a non-divided glass cell (100 mL) with an airtight seal. The synthesized Ti/TiO$_2$ NTA-Mn$_x$O$_y$ electrode was used as an anode, Ag/AgCl (3M KCl) as reference electrode and Ti mesh (DeNora, Italy) as a counter electrode. Electrochemical cells were sealed, and the headspace was under gentle nitrogen purge during the experiments to prevent the intrusion of oxygen and thus loss of sulfide to its oxidation to sulfate. The impact of potential on the sulfide removal was investigated by performing the experiments in the OC and at 0.4 V, 0.6 V or 0.8 V/SHE using a deoxygenated 2.6 mM NaNO3 as supporting electrolyte, with 2 mM Na$_2$S at pH 12. The diluted supporting electrolyte solution (3.2 mS·cm$^{-1}$) was purposely selected to simulate the conductivity of the real sewage (0.9-9 mS·cm$^{-1}$), as low ionic conductivity of real contaminated water is a limiting factor in electrochemical treatment systems. The impact of the initial sulfide concentration on the reaction kinetics was evaluated at 0.8 V/SHE by amending the supporting electrolyte with 0.9 mM, 2 mM or 3.2 mM of sulfide. All of the above-mentioned experiments were performed at the initial pH 12. To investigate the impact of pH, experiments were performed at the initial pH 8 in 2.6 mM NaNO$_3$ and 2 mM of Na$_2$S. As previously reported, lower initial pH of the solution has a minor effect on the reaction rate of sulfide oxidation with manganese oxides as it is typically followed by the rapid pH increase. Therefore, determination of the pH impact on the oxidation rate required continuous addition of 0.1 M HNO$_3$ acid to the electrolyte. To investigate the performance of the Ti/TiO$_2$ NTA-Mn$_x$O$_y$ electrodes for sulfide removal under realistic conditions, experiments were performed with real sewage that was deoxygenated and amended with 2 mM of sulfide. The conductivity of the sampled sewage was identical to the supporting electrolyte used in the experiments (i.e., 3.2 mS·cm$^{-1}$). All experiments were performed in duplicate, and values are expressed as mean with their standard errors.

The energy consumption was expressed as electric energy per order (Wh·L$^{-1}$), required to reduce the concentration of sulfide by one order of magnitude in a unit volume of the treated solution according to the following equation:

$$E_{EO} = \frac{V \cdot I \cdot t}{v \cdot \log\left(\frac{C_0}{C}\right)}$$

where $V$ is cell voltage (V), $I$ is measured current (A), $v$ is the cell volume (L), $C_0$ and C are the initial and final concentration of sulfide, and t is the electrolysis time (h).

Example 4: Sample analysis

To evaluate the stability of the Mn$_x$O$_y$ coating, the concentration of the total dissolved manganese and other metals in the NaNO$_3$ supporting electrolyte and sewage was measured by means of inductively coupled plasma-optical emission spectrometry (ICP-OES) (Agilent 5100, Agilent Technologies, US). The concentration of the dissolved sulfur species (i.e., HS$^-$, S$_2$O$_3^{2-}$, SO$_4^{2-}$) was determined by ion chromatography (IC) (Dionex IC5000, Dionex, USA). The experiments were performed in duplicates, the measured mean sulfide concentrations were normalized against the initial values and fitted to the first-order kinetics model with R$^2 \geq 0.99$. In order to compare sulfide oxidation kinetics observed using Mn$_x$O$_y$ based electrodes with different substrates (i.e., Ti/TiO$_2$ NTA and GF), the reaction rate was normalized to the geometric surface area.

The existing methods for $S^0$ measurement usually require a pre-concentration or extraction step with organic solvents. However, such step would be difficult to perform in this study because of different forms of the produced elemental sulfur (i.e., deposited at the electrode surface, and colloidal). Moreover, exposure of the Ti/TiO$_2$ NTA-MnxOy electrodes to organic solvents can affect catalytic properties and the subsequent performance of the coating. Thus, elemental sulfur was determined as the difference between the total sulfide added and the dissolved sulfur species measured was assumed to be elemental sulfur. The ratio of the resulting elemental sulfur to sulfide removed during the experiment was considered as sulfur yield.

Example 5: Activity of TiO$_2$ NTA-MnxOy electrodes towards sulfide oxidation

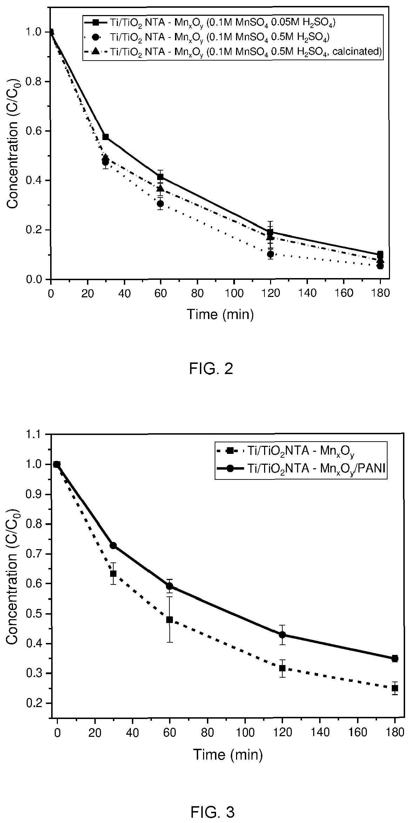

All of the synthesized Mn$_x$O$_y$ based materials, polarized at 0.8 V/SHE, caused a rapid sulfide decrease by 90 % within 3 h (Figure 2). The main reaction product was elemental sulfur, with 94% yield of S°. The produced elemental sulfur was deposited at the electrode surface, forming a loosely packed visible layer (S$_{8\ dep}$). According to reports in the literature, simultaneous participation of oxygen and manganese oxide in sulfide oxidation favors the formation of thiosulfate over elemental sulfur or sulfate. Therefore, slight increase of S$_2$O$_3^{2-}$ concentrations (i.e., 0.1 mM or 6% of sulfide removed), observed in all performed experiments was a consequence of the presence of trace amounts of dissolved oxygen in the supporting electrolyte solution. Though several studies assumed that polysulfide is an important intermediate of sulfide oxidation with Mn oxides at basic pH, the solution stayed colorless throughout the experiment indicating the absence of polysulfide formation.

The Ti/TiO$_2$ NTA-MnO$_2$ synthesized using lower acid concentration in the electrodeposition (i.e., 0.05 M H$_2$SO$_4$) performed slightly worse compared to the material synthesized in the presence of 0.5 M H$_2$SO$_4$ (i.e., 0.76$\pm$0.09 h$^{-1}$ and 0.98$\pm$0.14 h$^{-1}$, respectively) (Figure 2). Smooth coating with little relief observed in the SEM images is typically associated with the lower active surface area and leads to a decreased catalytic activity. Indeed, the electrochemically active surface area of the electrodes synthesized at higher acid concentration (i.e., 0.5 M H$_2$SO$_4$) was estimated at 408 cm$^2$, while lower acid concentration yielded material with slightly lower active surface are (i.e., 362 cm$^2$). Thus, the Ti/TiO$_2$ NTA-MnO$_2$ electrode synthesized using 0.5 M H$_2$SO$_4$ was selected for further experiments. Catalytic oxidation of sulfide is initiated with the adsorption of HS- 15 onto the MnxOy catalyst surface, followed by the formation of a surface complex, which is then oxidized to adsorbed zero valent sulfur:

$$Mn^{IV} + HS^- \rightleftarrows Mn^{IV}S^- + H_2O$$

$$Mn^{IV}S^- \rightarrow Mn^{III}S$$

$$Mn^{III}S \rightarrow Mn^{II}S$$

$$Mn^{II}S \rightarrow Mn^{II} + S^0$$

The electron transfer from Mn (IV) to sulfide occurs in two consecutive steps and involves the formation of the Mn(III) surface complex as a reaction intermediate. Being the intermediate, Mn (III) itself is capable of rapid catalytic oxidation of sulfide. Although in the case of Mn (IV) the reaction mechanism requires one additional step, the transition between the surface complexes is so rapid that it does not significantly affect the removal rates, as evidenced from the results obtained with the non-calcined MnO$_2$ and calcined Mn$_2$O$_3$ coatings (i.e., 0.98$\pm$0.14 h$^{-1}$ and 0.83$\pm$0.01 h$^{-1}$ for Mn (IV) and Mn (III), respectively) (Figure 2).

Finally, the presence of PANI in the coating slightly reduced the catalytic activity of the material (i.e., 0.45 h$^{-1}$ and 0.34 h$^{-1}$ for Ti/TiO$_2$ NTA-Mn$_x$O$_y$/PANI anodes, respectively) (Figure 3). The slight loss of the activity can be attributed to lower content of Mn$_x$O$_y$ catalyst in the Ti/TiO$_2$ NTA-Mn$_x$O$_y$/PANI samples compared with materials coated with Mn$_x$O$_y$ only. On the other hand, the incorporation of PANI significantly improves the conductivity of the coating, which reduces required energy input of the system. For instance, electric energy per order for the system equipped with Ti/TiO$_2$ NTA-Mn$_x$O$_y$/PANI electrodes was 25% lower compared to Ti/TiO$_2$ NTA-Mn$_x$O$_y$ (i.e., 3.85 WhL$^{-1}$ and 2.91 WhL$^{-1}$ for Ti/TiO$_2$ NTA-Mn$_x$O$_y$/PANI anodes, respectively).

Example 5.1: Impact of applied anode potential

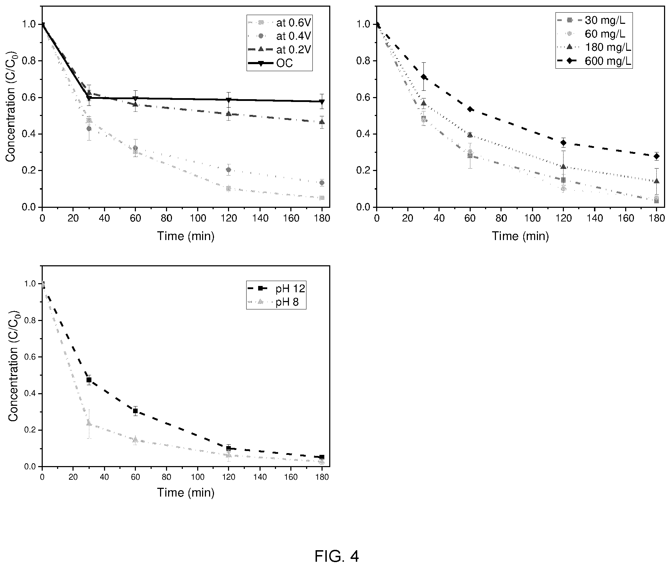

The impact of the anode potential on sulfide oxidation was investigated by performing the experiments in the OC and at 0.4 V, 0.6, 0.8 V/SHE. As can be seen from Figure 4a, in the absence of any applied potential, the Ti/TiO$_2$ NTA-MnO$_2$ electrodes lead to a rapid drop in sulfide concentration by 40% within 30 min. Oxidation of sulfide occurs simultaneously with the reduction of the MnO$_2$ coating, which leads to the production of Mn (II) and its subsequent release into the electrolyte in the form of Mn$^{2+}$:

$$Mn^{II} \rightarrow Mn^{2+}_{aq} + \text{new surface site}$$

After this initial drop, sulfide concentration remained constant, indicating a complete depletion of the $MnO_2$ catalyst (Figure 4a). Complete dissolution of the coating was also confirmed by ICP-OES analysis of the supporting electrolyte, which detected substantial increase of total dissolved manganese concentration at the end of the experiment. The measured amount of the dissolved manganese (15.03 mgL$^{-1}$ in 100 mL, i.e., 1.503 mg) is slightly lower than the theoretical weight of the electrodeposited MnO2 film, calculated according to the Faraday's law (i.e., 1.803 mg).

Polarization of the Ti/TiO$_2$ NTA-MnO$_2$ electrodes at the anodic potential as low as 0.4 V/SHE drastically minimized the loss of the $MnO_2$ catalyst. The amount of total dissolved manganese detected in the electrolyte (i.e., 0.07 mg) represented only 3.8% of the theoretical coating weight. The coating stabilization was achieved by recovering the reduced Mn (II) back to its initial oxidation state with the application of potential. The Mn 3s doublet peak separation in the samples after the sulfide removal experiments was equal to the pristine TiO$_2$ NTA-MnO$_2$ sample. However, such stabilization could not be achieved without an appropriate substrate such as TiO$_2$ NTA. The TiO$_2$ nanostructures not only improve the mechanical stability of the coating through better adhesion, but, more importantly, promote the charge transfer and enhance the conductivity of the electrode, which enables a rapid recovery of the Mn catalyst. Rapid restauration of the oxidation state of Mn maintained the catalytic activity of the Ti/TiO$_2$NTA-MnO$_2$ electrode as was indicated by the gradual decrease of sulfide concentration during the entire experiment. Further increase of the potential significantly enhanced the sulfide oxidation kinetics (i.e., 0.21 $\pm$ 0.07 h$^{-1}$ at 0.4 V/SHE, 0.53 $\pm$ 0.1 h$^{-1}$ at 0.6 V/SHE and 0.98 $\pm$ 0.2 h$^{-1}$ at 0.8 V/SHE). This was a consequence of a faster MnO$_2$ catalyst reoxidation at higher potentials as the amount of dissolved Mn was decreased even further when potential was increased, with only 0.01 mg of Mn released at 0.8 V/SHE, which represents 0.53% of the theoretical coating weight. In addition, the reaction kinetics could also be accelerated though faster direct electrolysis of sulfide (Figure 4a). For instance, elemental sulfur can be electrochemically oxidized to sulfate at standard redox potential of 0.357 V/SHE, however, no increase of the dissolved sulfur species could be detected.

Example 5.2: Impact of the initial sulfide concentration and pH

The initial sulfide concentration had a pronounced effect on the sulfide oxidation rate (Figure 4b). Lowering the initial sulfide concentration from 2 mM to 0.9 mM did not affect the reaction kinetics, as first-order rate constants were the same (i.e., 1.04 $\pm$ 0.05 h$^{-1}$ and 0.98 $\pm$ 0.2 h$^{-1}$, respectively). Increase in the initial sulfide concentration to 3.9 mM led to slower sulfide oxidation kinetics, with rate constants of 0.62 $\pm$ 0.1 h$^{-1}$ (Figure 4b). Slower removal rates at higher HS$^-$ concentration confirms that the reaction occurs through the formation of an inner sphere complex with MnO$_2$. The inner sphere mechanism is not limited by the mass transfer, instead the rate of the reaction is determined by the rate at which HS$^-$ ions can form complexes with the MnO$_2$ catalyst. Higher HS$^-$ concentration had no negative impact on the MnO$_2$ coating stability as the total dissolved manganese detected in the electrolyte (i.e., 0.01 mg) represented less than 0.6% of the theoretical weight of the deposited MnO$_2$ coating.

At pH 8, sulfide was removed at a higher rate (1.32 $\pm$ 0.2 h$^{-1}$) compared with the pH 12 experiments (0.98 $\pm$ 0.2 h$^{-1}$) (Figure 4c). The pH-dependence of the sulfide oxidation rate further supports an inner-sphere complex formation between HS- and the MnO$_2$ coating.

The catalytic activity and stability of the MnO$_2$ catalysts is generally very sensitive towards the pH of the electrolyte. The surface groups of manganese oxides are amphoteric, meaning they can function both as an acid and a base. Hence, the catalyst surface can undergo protonation and/or deprotonation depending on the value of the pH of the solution:

$$Mn^{IV}OH \leftrightarrow Mn^{IV}O^- + H^+$$

pK$_1$ =8.2

On the other hand, sulfide speciation is also dependent on the pH as can be seen from the sulfide ionization equilibrium:

$$H_2S_{(aq)} \leftrightarrow HS^-$$

pK$_1$ =6.88

The formation of a complex is affected by the relative distribution of different sites on the manganese oxide surface and of sulfide in the solution. The pH range between 7 and 8 enables the formation [Mn$^{IV}$OH][HS$^-$] complex, which leads to faster sulfide oxidation kinetics compared to [Mn$^{IV}$OH][H$_2$S] and [Mn$^{IV}$O$^-$][HS$^-$].

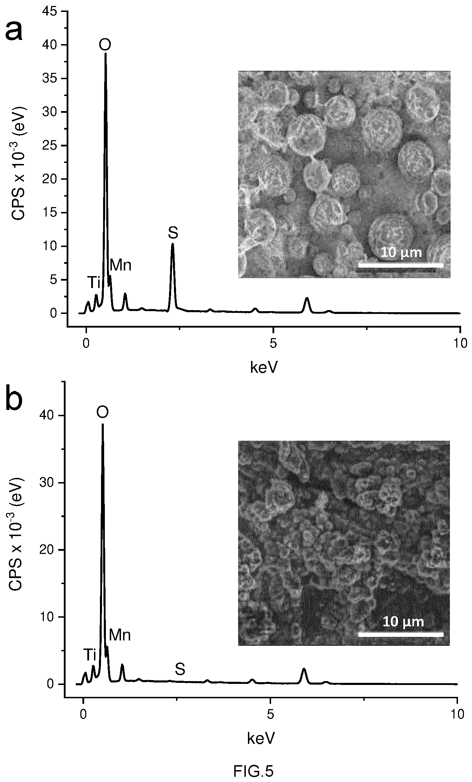

Even though the final product of the treatment at both pH 8 and 12 was elemental sulfur, at pH 12 sulfur remained adsorbed at the anode surface ($S_{8\ dep}$), while at pH 8 sulfur was formed and instantly desorbed from the anode surface and released into the electrolyte producing colloidal sulfur particles of ~ 0.2 μm ($S_{8\ col}$). Adsorption of the elemental sulfur to the Ti/TiO$_2$NTA-MnO$_2$ electrode surface at pH 12 was confirmed by the recorded SEM and EDX (Figure 5a), as well as XPS analysis. The SEM images of the electrode surface after the sulfide removal test at pH 8 demonstrate that the MnO$_2$ morphology remained unchanged (Figure 5b). Moreover, neither EDX nor XPS detected the presence of sulfur, thus further evidencing that when controlling the supporting electrolyte pH at pH 8, the formed elemental sulfur was not electrodeposited but released as $S_{8\ col}$. The difference in the forms of produced sulfur indicates the shift in the $S_8$ formation mechanism. As was mentioned before, further oxidation of surface complexes of sulfide ion and manganese yields zero valent sulfur, $S^0$. At pH 8, zero valent sulfur is desorbed from the anode surface and released into the solution, where it undergoes further complexation to $S_{8\ col}$. On the contrary, at pH 12, formation of elemental sulfur ($S_{8\ dep}$) becomes diffusion controlled and occurs at the electrode surface.

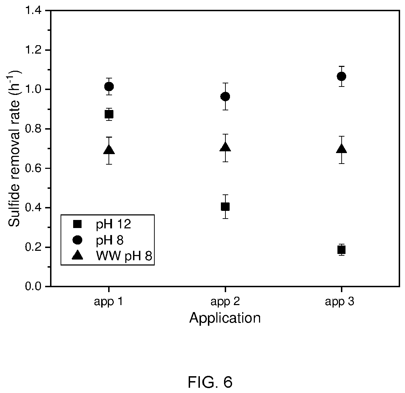

Direct electrooxidation of sulfide to elemental sulfur is typically associated with the gradual loss of performance, which occurs as a result electrode passivation with the isolating layer of elemental sulfur. In electrooxidation at pH 12 in which $S_{8\ dep}$ remained at the anode surface, rapid decrease in sulfide removal rates was observed within three consecutive applications, i.e., 0.81±0.03 h$^{-1}$, 0.41±0.06 h$^{-1}$, and 0.19±0.08 h$^{-1}$ in the first, second and third cycle (Figure 6). Moreover, the electrode passivation was further supported by the increase in the energy consumption in each subsequent cycle (i.e., 0.09 WhL$^{-1}$, 0.18 WhL$^{-1}$ and 0.79 WhL$^{-1}$ in the first, second and third application, respectively). Similar passivation with elemental sulfur was noted in the repetitive applications of the Ti/TiO$_2$NTA-MnO$_2$ anode in the experiments without pH control, as pH was rapidly increased from the initial pH 8 to pH 12. On the contrary, when the pH was controlled at pH 8, the Ti/TiO$_2$NTA-MnO$_2$ electrode demonstrated rapid and robust sulfide removal in the consecutive cycles, with unchanged sulfide removal rate constants (i.e., 1.01±0.04 h$^{-1}$, 0.96±0.06 h$^{-1}$, and 1.06±0.1 h$^{-1}$ in the first, second and third application) and energy consumption (i.e., 0.05 Wh L$^{-1}$, 0.044 Wh L$^{-1}$ and 0.042 Wh L$^{-1}$ in the first, second and third application, respectively), demonstrating that the electrode passivation was effectively avoided (Figure 6).

## Example 6: Electrocatalytic sulfide removal in real sewage

Sulfide removal rates observed in the experiments with real sewage were somewhat lower (0.69±0.06 h$^{-1}$) compared to the experiments performed in the supporting NaNO3 electrolyte (1.01±0.04 h$^{-1}$) (Figure 6), while the energy consumption of the system increased (i.e., 0.05 WhL$^{-1}$ and 0.29 WhL$^{-1}$ in the supporting NaNO$_3$ electrolyte and in real sewage, respectively). This can be explained by the participation of the MnO$_2$ coating in reactions other than sulfide oxidation. A slight decrease (i.e., 8% removal) in chemical oxygen demand (COD) of was observed at the end of the experiments, indicating a partial oxidation of the organic matter by the MnO$_2$ coating. Nevertheless, sulfide was still completely removed within 3 h, indicating high selectivity of TiO$_2$ NTA-MnO$_2$ electrode even in the case of complex matrix such as real sewage. Moreover, phosphate, typically present in wastewater, can block the MnO$_2$ surface sites available for the reaction with sulfide and inhibit sulfide removal. The competition between sulfide and phosphate for the MnO$_2$ sites was further confirmed by the slight decrease of phosphate concentration (i.e., from 0.08 mM to 0.04 mM). Notwithstanding the presence of organics and inorganics in real sewage that are known to react with the Mn-oxide and can cause reductive dissolution of the MnO$_2$ coating, the electrodes remained stable and no release of Mn$^{2+}$ ions was detected in the ICP-OES analyses.

Given that the buffering capacity of the real sewage avoided an increase in pH during the experiment and maintained it at pH 8, the formation of elemental sulfur proceeded in the same manner as in the experiments performed using NaNO$_3$ electrolyte at pH 8. The final product of the sulfide oxidation in real swage was zero valent sulfur, that underwent complexation to $S_{8\ col}$ in the bulk of the electrolyte. Thus, the passivation of the anode surface with elemental sulfur was completely avoided, and there was no decrease in the sulfide removal rates in subsequent applications (i.e., 0.69±0.06 h$^{-1}$, 0.70±0.065 h$^{-1}$, 0.69±0.09 h$^{-1}$ in the first, second and third cycle) and the energy consumption of the system remained constant (i.e., 0.29 WhL$^{-1}$, 0.26 WhL$^{-1}$, 0.31 WhL$^{-1}$ in the first, second and third cycle) (Figure 6).

## Claims

1. A method to prepare an electrode with a manganese oxide coated titanium oxide nanotube array interlayer comprising the following steps:

    a) polishing a titanium plate;
    b) degreasing, rinsing and drying the polished titanium plate;
    c) etching the titanium plate in a solution comprising an inorganic acid having a concentration of 5% or more by weight with respect to the total amount of solution;

d) anodizing the treated titanium plate of step c) in a solvent comprising a fluoride salt by applying a voltage of 10 to 30 V to obtain the titanium oxide nanotube array interlayer on the titanium plate;

e) rinsing the titanium plate in water;

f) calcinating the anodized titanium plate;

g) depositing manganese onto the calcinated titanium plate by anodic electrodeposition in a medium containing a manganese (II) salt and an inorganic acid, providing a manganese oxide coated titanium oxide nanotube array interlayer on the titanium plate.

2. The method according to claim 1, wherein polishing titanium plates in step a) is performed by sandblasting.

3. The method according to claim 1 or 2, wherein degreasing the titanium plates in step b) is performed in a solvent selected from the group of isopropanol, acetone, methanol and/or combinations thereof.

4. The method according to any one of claims 1 to 3, wherein the inorganic acid in step c) is hydrochloric acid, preferably having a concentration of between 10 to 18% w/w.

5. The method according to any one of claims 1 to 4, wherein the solvent in step d) is a combination of a protic solvent and another solvent selected from the group of diols, polyols or polar aprotic solvents.

6. The method according to any one of claim 1 to 5, wherein the protic solvent is selected from the group comprising water or ethanol and the other solvent is selected from the group comprising ethylene glycol, glycerol, diethylene glycol, triethylene glycol, polyethyleneglycol, dimethylsulfoxide, formamide, N-methylformamide and dimethylformamide.

7. The method according to any one of claims 1 to 6, wherein the solvent in step d) comprises water and glycerol, and the fluoride salt is ammonium fluoride.

8. The method according to any one of claims 1 to 7, wherein the voltage in the anodization step d) is 20 V, and said step takes preferably a time between 1 and 5 hours.

9. The method according to any one of claims 1 to 8, wherein the calcination step f) is performed at a temperature between 350 and 450°C, preferably for at least 1 hour.

10. The method according to any one of claims 1 to 9, wherein the manganese (II) salt in step g) is manganese sulfate and the inorganic acid is sulfuric acid.

11. The method according to any one of claims 1 to 10, wherein the anodic electrodeposition in step g) is performed in potentiostatic mode at 0,5 to 5 V vs Standard Hydrogen Electrode.

12. The method according to any one of claims 1 to 11, wherein the medium in step g) further comprises an organic compoundable to produce a conductive polymer.

13. An electrode having a manganese oxide coated titanium oxide nanotube array interlayer obtained by the method according to any one of claims 1 to 12.

14. Use of the electrode according to claim 13 in wastewater purification or biogas purification.

15. Use of the electrode according to claim 13 in desulfurization of a fluid, preferably wastewater or biogas.

FIG. 1

FIG. 2

FIG. 3

FIG. 4

FIG.5

FIG. 6

Europäisches
Patentamt

European
Patent Office

Office européen
des brevets

# EUROPEAN SEARCH REPORT

Application Number

EP 21 38 2385

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | MASSA ANDREA ET AL: "Electro-oxidation of phenol over electrodeposited MnOx nanostructures and the role of a TiO2 nanotubes interlayer", APPLIED CATALYSIS B. ENVIRONMENTAL, vol. 203, 1 April 2017 (2017-04-01), pages 270-281, XP055840245, AMSTERDAM, NL ISSN: 0926-3373, DOI: 10.1016/j.apcatb.2016.10.025 * abstract * * page 271 * | 1-15 | INV. C25F3/04 B01D53/14 C02F1/467 C25D11/26 C25B11/063 C25B11/079 ADD. C02F1/461 C02F101/10 |
| X | CN 106 086 989 A (UNIV CENTRAL SOUTH) 9 November 2016 (2016-11-09) * paragraphs [0002] - [0004], [0034] - [0038] * | 1-15 | |
| A | CN 111 634 982 A (ZHAO YUPING) 8 September 2020 (2020-09-08) * paragraphs [0016], [0017] * | 1-15 | |
| A | US 2012/279872 A1 (CHEN AICHENG [CA] ET AL) 8 November 2012 (2012-11-08) * paragraph [0066] * | 1-15 | TECHNICAL FIELDS SEARCHED (IPC) C02F C25F B01D C23C C25D C25B |
| A | SERGIENKO NATALIA ET AL: "Manganese oxide-based porous electrodes for rapid and selective (electro)catalytic removal and recovery of sulfide from wastewater", APPLIED CATALYSIS B. ENVIRONMENTAL, ELSEVIER, AMSTERDAM, NL, vol. 267, 1 February 2020 (2020-02-01), XP086055112, ISSN: 0926-3373, DOI: 10.1016/J.APCATB.2020.118608 [retrieved on 2020-02-01] * abstract * | 1-15 | |

The present search report has been drawn up for all claims

| Place of search | Date of completion of the search | Examiner |
|---|---|---|
| The Hague | 15 September 2021 | Fiocchi, Nicola |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 21 38 2385

This annex lists the patent family members relating to the patent documents cited in the above-mentioned European search report.
The members are as contained in the European Patent Office EDP file on
The European Patent Office is in no way liable for these particulars which are merely given for the purpose of information.

15-09-2021

| Patent document cited in search report | | Publication date | Patent family member(s) | | Publication date |
|---|---|---|---|---|---|
| CN 106086989 | A | 09-11-2016 | NONE | | |
| CN 111634982 | A | 08-09-2020 | NONE | | |
| US 2012279872 | A1 | 08-11-2012 | CA | 2762209 A1 | 25-11-2010 |
| | | | CN | 102596823 A | 18-07-2012 |
| | | | US | 2012279872 A1 | 08-11-2012 |
| | | | WO | 2010132993 A1 | 25-11-2010 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 105185598 A

- CN 109179590 A

**Non-patent literature cited in the description**

- **WLODARCHAK et al.** *Proceedings of the Water Environment Federation,* 2002
- **SERGIENKO et al.** *Applied Catalysis B: Environmental,* 2020, vol. 267

- **MASSA et al.** *Applied Catalysis B: Environmental,* 2017, vol. 203
- **SERGIENKO, N et al.** *Applied Catalysis B: Environmental,* 2020, vol. 267